# EUROPÄISCHE PATENTSCHRIFT

(11) **EP 0 848 831 B1**
(45) Veröffentlichungstag und Bekanntmachung des Hinweises auf die Patenterteilung: **12.12.2001**
(21) Anmeldenummer: 96938003.9
(22) Anmeldetag: 09.09.1996
(51) Int. Cl.: G01S 15/88, B60R 21/00, G01S 15/04, G01S 15/52

(54) **VERFAHREN UND EINRICHTUNG ZUR ERFASSUNG UND ÜBERWACHUNG EINES TEILRAUMES**
PROCESS AND DEVICE FOR DETECTING AND MONITORING A PARTIAL SPACE
PROCEDE ET DISPOSITIF DE DETECTION ET DE SURVEILLANCE D'UN ESPACE PARTIEL

(30) Priorität: 08.09.1995 DE 19533316
(43) Veröffentlichungstag der Anmeldung: 24.06.1998
(73) Patentinhaber: TRW Automotive Electronics & Components GmbH & Co. KG, 78315 Radolfzell (DE)
(72) Erfinder: SCHWEIZER, Karl, D-71297 Mönsheim (DE)
(74) Vertreter: Eder, Thomas, Dr.-Ing.
(86) Internationale Anmeldenummer: DE9601691
(87) Internationale Veröffentlichungsnummer: WO9709639

(56) Entgegenhaltungen:
- EP-A- 0 617 186
- DE-A- 3 003 887
- DE-A- 3 802 159
- DE-C- 4 325 748
- GB-A- 2 173 595
- US-A- 4 122 430
- US-A- 5 235 316
- PROCEEDINGS OF THE INTERNATIONAL CONFERENCE ON ROBOTICS AND AUTOMAT, SAN DIEGO, MAY 8 - 13, 1994, Bd. VOL. 4, Nr. CONF. 11, 8.Mai 1994, INSTITUTE OF ELECTRICAL AND ELECTRONICS ENGINEERS, Seiten 3130-3135, XP000481127 KLEEMAN L ET AL: "AN OPTIMAL SONAR ARRAY FOR TARGET LOCALIZATION AND CLASSIFICATION"

## Beschreibung

Die Erfindung betrifft ein Verfahren zur Erfassung und Überwachung eines Teilraumes, insbesondere zur Feststellung der Platzbesetzung in einem Fahrzeug und daraus ableitbarer Aktivierung und/oder Schaltung von Zusatzeinrichtungen mit den Merkmalen des Oberbegriffs des Patentanspruches 1 sowie eine Einrichtung zur Ausführung dieses Verfahrens mit den Merkmalen des Oberbegriffs des Patentanspruches 9.

Aus der DE 38 02 159 A1 ist eine Schalteinrichtung zur Freigabe bzw. zum Unterbinden einer Aktivierung wenigstens einer, einem verstellbaren Fahrzeugsitz zugeordneten Zusatzeinrichtung eines Fahrzeuges, wie z.B. einem oder mehreren Personen-Rückhalteelementen eines Personen-Rückhaltesystems, einer Sitzheizung usw. bekannt. Bei nicht besetzten Sitzen von Fahrzeugen kann die Aktivierung von Zusatzeinrichtungen unterbunden werden. Hierfür wird die Position des Fahrzeugsitzes relativ zum Fahrzeug und die Position von Sitzteilen relativ zueinander erfaßt. Ein Sensor für Ultraschall mit Sender und Empfänger erfaßt die Entfernung einer einzigen Sitzstelle. Die Entfernungsmessung erfolgt aufgrund eines Impulsecho-Laufzeitverfahrens. Nachteilig ist, daß diese bekannte Schalteinrichtung es nicht erlaubt, die auf dem Sitz befindlichen Objekte, z.B. Personen und Kindersitz mit Kind, zu unterscheiden. Auch ist die reine Entfernungsmessung für die Auswertung zu grob und abhängig von der Voraberfassung der Sitzentfernungen bzw. Sitzstellungen.

Der Erfindung liegt die Aufgabe zugrunde, ein Verfahren und eine Einrichtung anzugeben, die es erlauben, in einfacherer und detaillierterer Form Teilräume, insbesondere von Sitzen in Kraftfahrzeugen zu erfassen, wobei zudem die Auswerteeinrichtung für die Rücksignale auch hinsichtlich der Personenkonturen bessere Aufschlüsse bringt.

Die Erfindung löst diese Aufgabe mit den Merkmalen der Ansprüche 1 und 9.

Dadurch, daß die Erfassung und Überwachung der Teilräume unter Verwendung einer Sensoreinrichtung mit mehreren Sendern und Empfängern für Ultraschall, wie zum Beispiel Arrays von Ultraschallsensoren oder Mehrelementsensoren, erfolgt, ist es möglich, auf einfachere Weise Rückschlüsse auch auf die Objektform bzw. -kontur in den Teilräumen zu ziehen und z.B. festzustellen, ob eine Person oder ein Kindersitz mit Kind auf einem Sitz vorhanden ist.

Die Aktivierung bzw. Schaltung von Zusatzeinrichtungen, wie z.B. von Airbags kann hierdurch auch hinsichtlich des Innendrucks beeinflußt werden. So kann es z.B. sein, daß bei einem Kind mit Kindersitz auf dem Beifahrersitz abhängig von seiner Einbaurichtung der Innendruck eines zugeordneten Airbags vermindert oder ganz abgeschaltet wird, wobei auch die Geschwindigkeit der Innendruckerhöhung (Aufblasen) eines Airbags von den Bewegungsparametern und somit auch der zu erwartenden Aufprallwucht des Objekts während eines Unfalls in Abhängigkeit gebracht werden kann.

Durch das erfindungsgemäße gleichzeitige oder zeitversetzte Aussenden von Ultraschallsignalen einer Mehrzahl bzw. Vielzahl einzelner Sender einer Sensoreinrichtung wird dabei in dem zu beobachtenden (Teil-)Raum ein Schallfeld bzw. Schallfelder erzeugt, das durch die - von der Innenraumkontur und aller sich darin befindlicher Gegenstände durch Interferenzen und Laufzeiteffekte gebildete - Struktur geprägt ist.

Diese Kontur ist durch das Aufzeichen der Rücksignale bzw. des entstandenen Schallfeldes mit den in der Sensoreinrichtung befindlichen Empfängern und durch eine Auswertung mittels einer Auswerteeinrichtung des Signalamplitudenverlaufs über die Zeit, erfaßbar, wobei es hierdurch möglich ist, die Form und näherungsweise selbst das Gewicht eines zu erfassenden Objekts zu bestimmen.

Die Sensoreinrichtung, bei der auch jeweils mehrere Sender zusammen als ein Sensorelement bezeichnet werden können, kann in unterschiedliche Richtungen gleichzeitig oder zeitlich verschoben ein Ultraschallfeld bzw. -felder abstrahlen.

Weiterhin ist es denkbar, ein dynamisches Schallfeld zu erzeugen. Dies kann beispielsweise durch vertikal und/oder horizontal schwenkbar angeordnete Sender oder durch spezielle (elektronische) Ansteuerung der einzelnen zusammenwirkenden Sender bzw. Sensorarrays oder Mehrelementsensoren erreicht werden. Ein derartig erzeugtes Schallfeld läßt sich dann vorteilhafterweise durch phasenrichtige Ansteuerung der aktiven Elemente (Sensorarrays) den räumlichen Gegebenheiten des Einsatzortes und den Erfordernissen eines Auswertungsalgorithmus dynamisch anpassen.

Es können beispielsweise handelsübliche 40 kHz-Biegeschwinger mit einer Schallkeule ab 50 oder 60°, bezogen auf 6 dB Schalldruckerniedrigung, verwendet werden. Die optimale Ausstattung liegt aber im Frequenzbereich zwischen 60 kHz und 80 kHz und einem Öffnungswinkel der Schallkeule von ca. 70-80° (bezüglich 6 dB Schalldruckerniedrigung).

In einer bevorzugten Ausführungsform der Erfindung kann durch gleichzeitiges Senden mehrerer Sender eines Sensorelements oder durch spezielle Ausbildung eines Senders eine ellipsoide Schallfeldcharakteristik erreicht werden, welche sich zur Erfassung der Objekte - beispielsweise kann ein zu beobachtender Teilraum eine andere Höhe als Breite aufweisen - besonders gut eignet.

Die als Amplituden/Laufzeitkurven aufgezeichneten digitalisierten Signale können in einer Auswerteinrichtung einer Analyse zur Extraktion von charakteristischen Strukturen und Parametern unterzogen werden. Dies kann mit jedem der aufgezeichneten Signale geschehen.

Alle so gewonnenen Parametersätze zu einem gegebenen Zeitpunkt können dann einer Einzelbewertung unterzogen werden. Im einfachsten Fall werden die aufgezeichneten Signale mittels Zeitfensterbetrachtung ausgewertet. Liegt in einem bestimmten Zeitfenster die Amplitude bzw. -spitze über einem definierten Schwellwert, so gilt ein Ereignis wie z.B. Person auf Beifahrersitz - bezüglich einer Stelle des beobachteten Teilraums - als eingetreten. Ein solche Zeitfensterbetrachtung kann dann an mehreren entscheidenden Stellen des empfangenen Signals erfolgen.

Natürlich sind auch andere Erkennungsmethoden denkbar. Beispielsweise könnte die Einhüllende des Empfangssignals über Korrelationsverfahren mit in Speicher abgelegten Einhüllenden fest definierter Ereignisse (Sitplatz leer, mit Person besetzt, mit reversen Kindersitz besetzt, usw.) verglichen werden, woraus ebenfalls Ergebnisse resultieren, die auf die Kontur und in guter Näherung auf das Gewicht des Objektes im Teilraum schließen lassen. Hierbei werden Schallfelder nacheinander oder auch gleichzeit erzeugt und aufgezeichnet, wobei Sender wie Empfänger auf die jeweiligen Stellen (beispielsweise Kopf-, Brust-, Kniebereich einer Person) eines Teilraums gerichtet strahlen bzw. empfangen können.

Das hieraus resultierende Ergebnis kann dann, wie vorstehend erwähnt zur Aktivierung bzw. Steuerung von Zusatzeinrichtungen verwandt werden.

Ist die Einzelbewertung nicht mit ausreichender Wahrscheinlichkeit eindeutig, ist es auch möglich, durch eine weitere Feinbewertung, beispielsweise durch Quervergleiche zwischen verschiedenen Datensätzen, den Entscheidungsspielraum so weit einzuengen, daß nur eine Entscheidung bleibt.

In weiterer Ausführungsform der Erfindung kann das System bei Bedarf - je nach Auslegung - auch in der Lage sein, den physikalischen Meßablauf nach den gegebenen Erfordernissen dynamisch zu variieren. Denkbar sind hier beispielsweise Änderungen in der Zahl der aufgenommenen bzw. aufgezeichneten Signale, in der Reihenfolge und in der Zusammenstellung des Multiplexings.

Ein daraus resultierendes Feinergebnis kann als Eingabe in eine Historie, beispielsweise in Form eines gleitenden zeitlichen Mittels, eingearbeitet werden, mit dessen Hilfe algorithmisch die Ausgabegröße des Systems bestimmt ist.

In besonderen Fällen ist es weiterhin denkbar, ein Ergebnis zu übergehen. Dies kann, optional, durch verschiedene Sicherungsmaßnahmen, wie Aktivitäten, die nur bei fest vorgegebenen gemeinsam oder gekoppelt auftretenden Ereignissen auslösbar sind, realisiert werden. So ist es z.B. denkbar, daß eventuelle Fehlergebnisse, die z.B. durch eine plötzliche Änderung des Luftdrucks durch das Öffnen eines Fahrzeugfensters und der daraus resultierenden geänderten Ultraschallwellenübertragung, entstehen können. Ein derartiges Fehlergebnis kann dann beispielsweise durch einen Vergleich mit den vorherigen und/oder folgenden Ergebnissen korrigiert oder durch die dann nicht schlüssige Kombination mit den Ergebnissen anderer Sensoreinrichtungen, wie Gewichtssensor im Sitz, Verzögerungssensoren im Fahrzeug usw., übergangen werden. Wird beispielsweise durch einen Gewichtssensor im Beifahrersitz die Belegung des Sitzes durch ein Objekt (Beifahrer) angezeigt, so kann ein angebliches Nichtvorhandensein als kurzzeitiges Fehlergebnis der Ultraschallsensoreinrichtung und Auswerteeinrichtung übergangen werden und ein Airbag trotzdem, zumindest mit Minimaldruck, ausgelöst werden.

Nach der Erfindung werden die Ultraschallsignale in Form von Bursts, beispielsweise 8 bis 15 oder mehr Zyklen, ausgesandt. Diese Signale können dabei die Form von Rechteckschwingungen mit vorteilhafter hoher Energieausbeute, Sinusschwingungen mit vorteilhaften minimalen Störungen, einer Mischform daraus oder anderer Signalarten aufweisen. Die Form der Einhüllenden des Sendebursts kann zur Beeinflussung spezifischer Spezialaufgaben in weiten Bereichen einstellbar sein, um das Auftreten von hörbaren Klicks zu verbessern.

Nach der Erfindung werden die Sendebursts pulsartig wiederholt, wobei die Wiederholfrequenz an die Funktion, also das zu beobachtende Objekt und Ereignis angepaßt werden kann (weitere dynamische Anpassung des Schallfeldes). So ist es z.B. denkbar, zur Beobachtung, ob sich eine Person oder Kindersitz auf dem zu erfassenden Sitz befindet oder nicht, mit einer niedrigeren Wiederholfrequenz zu arbeiten. Ist dagegen beispielsweise die schnell änderbare Kopfposition einer Person vor oder gar während eines Unfalls zu beobachten, so muß mit einer sehr hohen Wiederholfrequenz, also geringen Pausen zwischen aufeinanderfolgenden Burst, gearbeitet werden.

Weitere Ausgestaltungen der Erfindung ergeben sich aus den Unteransprüchen.

Die Erfindung wird nachfolgend anhand eines in der Zeichnung dargestellten Ausführungsbeispieles näher erläutert. In der Zeichnung zeigen:

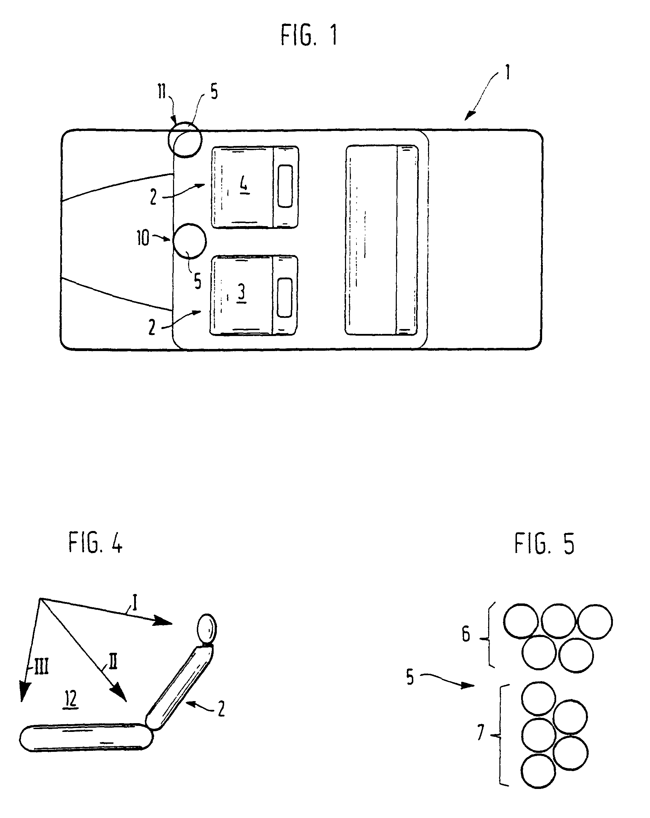

- Fig. 1: eine schematische Draufsicht auf ein Kraftfahrzeug,
- Fig. 2: eine Teil-Seitenansicht mit besetztem Fahrersitz,
- Fig. 3: eine Teil-Seitenansicht mit Beifahrersitz mit Kindersitz,
- Fig. 4: eine schematische Seitenansicht zur Erläuterung von möglichen Sensorrichtungen für die Erfassung des Teilraumes des Fahrer- oder Beifahrersitzes,
- Fig. 5: eine schematische Frontansicht von übereinander und nebeneinander angeordneten Sendern und Empfängern der Sensoreinrichtung und
- Fig. 6: Diagramme empfangener Signale unterschiedlicher Belegungen (vier) eines Beifahrersitzes.

Die Erfindung wird in Verbindung mit einem Kraftfahrzeug 1 erläutert.

Die zu erfassenden Teilräume 12 sind vorzugsweise die Räume der Vordersitze 2, z.B. des Fahrersitzes 3 und/oder des Beifahrersitzes 4. Es können aber auch Teilräume der Rückseite, wie z.B. Rücksitze, zusätzlich erfaßt werden, gegebenenfalls mit einer zusätzlichen Sensoreinrichtung, die dann vorteilhafterweise im Bereich der B-Säule, beispielsweise am Fahrzeughimmel, mittig oder seitlich angeordnet ist.

Es ist festzustellen, ob Fahrersitz 3 und/oder Beifahrersitz 4 durch Objekte, z.B. Personen oder Kindersitz mit Kind, belegt sind. Bei Besetzung dieser Sitze 3, 4 sollen z.B. Airbags aktiviert werden. Zusätzliche Einrichtungen wie Rückhaltegurte usw. sollen ebenfalls beeinflußbar sein.

Die Erfassung und/oder Überwachung der Teilräume 12 des Fahrersitzes 3 bzw. Beifahrersitzes 4 erfolgt durch eine Sensoreinrichtung 5, die aus mehreren Sendern 6 und mehreren Empfängern 7 besteht. Die Sender 6 strahlen Ultraschall, vorzugsweise mit 40 kHz bis etwa 80 kHz ab. Der Ultraschall wird in Form eines Bursts mit 8 bis 15 oder mehr Zyklen abgestrahlt. Die Burstlänge wird bedingt durch den Qualitätsfaktor Q des schwingenden Systems, hier des Ultraschallsensors. Die Anzahl der Zyklen des Bursts sollte zur optimalen Aussteuerung vorzugsweise etwa 0,7 x Q betragen. Bei speziellen Erfordernissen der Anwendung kann diese Zahl aber beispielsweise auf 20 bis 30 Zyklen auch variiert werden.

Es können handelsübliche 40 kHz-Biegeschwinger mit einer Schallkeule ab 50 oder 60° (bezügl. 6dB Schalldruckerniedrigung) verwendet werden. Die optimale Ausstattung liegt aber im Frequenzbereich zwischen 60 kHz und 80 kHz und einem Öffnungswinkel der Schallkeule von ca. 70-80°.

Eine weitere Verbesserung kann durch eine ellipsoide Schallfeldcharakteristik erreicht werden. Wie später ausgeführt, kann die Anordnung durch den Einsatz von Arrays von Ultraschallsensoren oder Mehrelementsensoren weiter verbessert werden. Mit diesen Sensoren läßt sich das erzeugte Schallfeld durch phasenrichtige Ansteuerung der aktiven Elemente den räumlichen Gegebenheiten des Einsatzorts und den Erfordernissen des Algorithmus dynamisch anpassen. Falls erforderlich, können auch möglichst schmale Schallkeulen erzeugt werden.

Die Sensoreinrichtung 5 kann, je nach Fahrzeugmodell, mittig im Bereich des Licht-Domes 10, der A-Säulen 11 der Karosserie oder am Fahrzeughimmel des Kraftfahrzeuges 1 angeordnet werden.

Wären auch Teilräume 12 der Rücksitze zu erfassen und zu überwachen, empfiehlt es sich, eine Sensoreinrichtung 5 an den B-Säulen der Karosserie des Kraftfahrzeuges 1 anzuordnen.

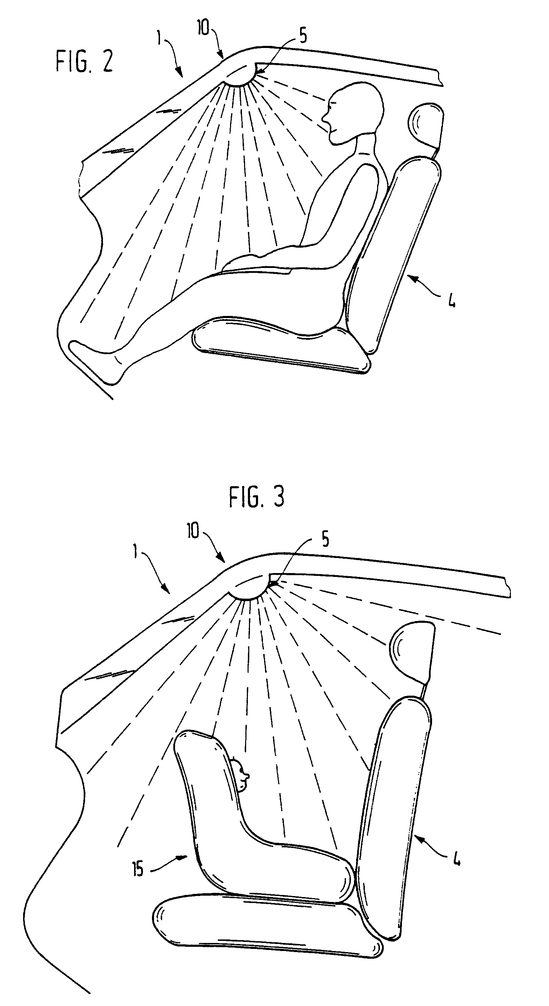

Wie aus Fig. 3 ersichtlich, strahlt die Sensoreinrichtung 5 Ultraschall in mehrere Richtungen I, II und III oder mehr zum Teilraum 12 hin ab. Soll eine z.B. auf dem Beifahrersitz 4 sitzende Person erfaßt werden, ist der Strahl I bzw. das Feld zum Kopf, der Strahl II zum Becken und der Strahl III zur Sitzvorderkante gerichtet. Die beschriebenen Abstrahlrichtungen beschreiben den Fall des Einsatzes von drei Einzelsensoren. Bei Sensorarrays oder Arrays von Sensoren mit dynamischer Schallfeldformung oder einer anderen Anzahl von Ultraschallsensoren können die Orientierungen der Sensoren den geänderten Bedingungen angepaßt werden.

Selbstverständlich ist es möglich, auch eine Vielzahl von Sendern 6 und Empfängern 7 sowie Arrays von Ultraschallsensoren oder Mehrelementsensoren in ausreichender Anzahl zu verwenden.

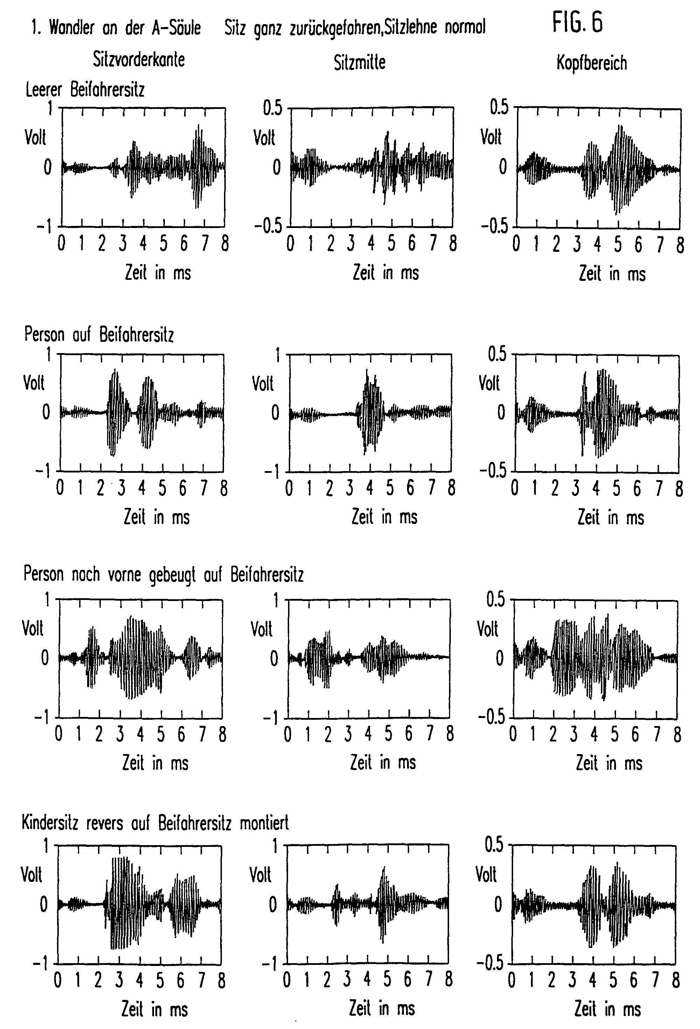

Die Sensoreinrichtung 5 kann somit eine Vielzahl von Sendern 6 in Form einer Gruppe nach Fig. 4 aufweisen. Die Sender 6 sind übereinander, zueinander versetzt angeordnet. Darunter können z.B. Empfänger 7 als Gruppe in Spalten nebeneinander versetzt angeordnet sein. Man erhält dadurch z.B. eine horizontale Sendercharakteristik und eine vertikale Empfängercharakteristik. Der beschriebene Effekt kann auch durch den Einsatz von Sensoren mit ellipsoider Schallfeldcharakteristik, wie z.B. von phasensteuerbaren Sensorarrays erreicht werden. Durch den Einsatz mehrerer vorteilhafterweise gerichtet abstrahlender Sender 6 bzw. gerichtet empfangender Empfänger 7 - sogenannte Transducer - können, wie im späteren erläutert, überlappende Bereiche entstehen, wodurch sich eine höhere Auflösung bei der Abtastung der Kontur des Objekts ergibt.

Die Sender 6 und/oder Empfänger 7 sind mit einer nicht dargestellten Auswerteeinrichtung verbunden. Die Rücksignale des von den Sendern 6 abgegebenen Ultraschalls bilden, aufgezeichnet in der Zeit- und Amplitudenachse, ein Diagramm, das in der Zeitachse eine Auswertung hinsichtlich der Laufzeit jedes Ultraschallimpulses und damit eine Entfernungsbestimmung der reflektierenden Fläche erlaubt. Zusätzlich bilden die Amplitudenspitzen eine Signalkontur. Je nachdem, ob ein Vordersitz 2 durch eine Person oder einen Kindersitz 15 mit Kind belegt ist, entstehen Signale, die ausgewertet Entfernungen der reflektierenden Flächen und/oder der Konturen der auf solchen Sitzen befindlichen Personen ermöglichen. Abhängig von den Signalauswertungen aktiviert die Auswertevorrichtung z.B. einen zugehörigen Airbag, wenn eine zu schützende Person auf dem zugehörigen Sitz 3, 4 festgestellt ist, oder ein solcher Airbag wird nicht aktiviert, wenn z.B. auf dem Beifahrersitz keine Person oder ein rückwärtsgerichteter Kindersitz festgestellt wird.

Es ist auch möglich, bei einem detektierten Ereignis "Objekt (z.B. Kopf) out of position", welches z.B. durch einen nach vorne gebeugten Beifahrer erzeugt wird, im Falle eines Unfalls den Airbag mit geringeren Druck aufzublasen, um die sich in dieser Position näher am Armaturenbrett (Aufbewahrungsort des Airbags) befindliche Person vor Schaden zu schützen.

Im folgenden wird die Funktionsweise der dargestellten Einrichtung ausführlich beschrieben.

Die Ultraschallsignale können von einem oder mehreren zu Sensorelementen (im Ausführungsbeispiel drei in Richtungen I, II und III) zusammengefaßten Sendern (6) bzw. Empfänger (7) - die sogenannten Transducer - einer Sensoreinrichtung (5) gleichzeitig oder zeitversetzt, vorzugsweise gerichtet, ausgestrahlt bzw. empfangen werden. Durch die ausgesandten Schallsignale entsteht im zu beobachtenden Raum ein Ultraschallfeld, das durch die von der Innenraumkontur und aller sich darin befindlicher Gegenstände durch Interferenzen und Laufzeiteffekte gebildete Struktur geprägt ist.

Der zeitliche Verlauf des Schalldrucks dieses Schallfelds wird an den Punkten, an denen die Ultraschallsensoreinrichtung bzw. deren Empfänger (7) bzw. Transducer sitzen, wieder vorzugsweise gerichtet, aufgezeichnet. Das kann an einer Stelle, an mehreren Stellen gleichzeitig und/oder gemultiplext erfolgen. Die Schallsignale werden, wie in Fig. 6 ersichtlich, zuerst als Amplituden/Laufzeitkurven aufgezeichnet. Die digitalisierten Signale werden dann einer Analyse zur Extraktion von charakteristischen Strukturen und Parametern unterzogen. Dies kann mit jedem der aufgezeichneten Signale geschehen. Hierbei werden im einfachsten Fall die aufgezeichneten Signale mittels Zeitfensterbetrachtung analysiert, wobei zu bestimmten Zeitpunkten (z.B. bei 2ms) der Signalverlauf in einem Zeitfenster definierter Dauer (z.B für 1ms) betrachtet wird. Liegt innerhalb eines solchen Zeitfensters die Amplitude bzw. -spitze des Signals über einem vordefinierten Schwellwert (bzw. ist in diesem Zeitfenster der Hüllkurve ein Maximum vorhanden), so gilt ein Ereignis, wie z.B. "Beifahrersitz an Stelle II (Sitzmitte) mit Person besetzt", als eingetreten.

Derartige Analysen werden für alle in Fig. 4 dargestellten Stellen (Richtungen I, II und III) eines Teilraums vorgenommen, wobei die Schallfelder jeweils nacheinander erzeugt und aufgezeichnet wurden. Es ist allerdings auch möglich mit mehreren Transducern (I;II, I;III, II;III, I;II;III) in Kombination gleichzeitig zu senden (überlappende Bereiche) und/oder mit einzelnen Transducern (I, II oder III) oder in Kombination aus mehreren (I;II, I;III, II;III, I;II;III) zu empfangen. Auch in diesen Fällen entstehen Signalmuster, die bestimmten Ereignissen über Auswerte- bzw. Erkennungsmethoden (s.o.) zuordenbar sind.

Alle gewonnenen Parametersätze (Richtungen I, II und III) zu einem gegebenen Zeitpunkt werden somit einer Einzelbewertung unterzogen. Das Ergebnis der Einzelbewertung (für Richtungen I, II und III) ergibt die Grundlage der Feinbewertung. Ist die Einzelbewertung eindeutig, so steht das Ergebnis fest. Im anderen Fall wird durch Quervergleiche zwischen verschiedenen Datensätzen (andere Zeitfenster) der Entscheidungsspielraum so weit eingeengt, daß nur eine Entscheidung bleibt. Das System ist bei Bedarf (je nach Auslegung) auch in der Lage, den physikalischen Meßablauf nach den gegebenen Erfordernissen dynamisch zu variieren (Änderung der Zahl der aufgenommenen Signale, Reihenfolge und Zusammenstellung des Multiplexings).

Das Feinergebnis wird als Eingabe in eine Historie eingearbeitet (im einfachsten Fall: gleitendes zeitliches Mittel), mit dessen Hilfe algorithmisch die Ausgabegröße des Systems bestimmt wird.

Es ist auch denkbar, daß abhängig von der Stellung der Sitze, der Sitzposition, der erfaßten Objektkontur usw. Airbags zwar aktiviert, aber hinsichtlich ihres Innendruckes verändert werden.

Die Auswerteeinrichtung aktiviert oder beeinflusst Rückhaltesysteme, z.B. Rückhaltegurte. Es ist auch denkbar, daß Fahrzeugsperren aufgehoben werden, wenn z.B. Rückhaltesysteme von den Personen, die auf den Sitzen erfaßt werden, angelegt sind.

Ein Teil der Sender bzw. Empfänger 6, 7 des Sensors 5 kann auch dazu benutzt werden, bei Verwendung elektrischer Fensterheber das Einklemmen von Körperteilen zu verhindern, indem die Abstrahlrichtung des Ultraschalls des Sensors 5 Fensterbereiche erfaßt.

Schließlich ist es auch möglich, die Auswerteeinrichtung mit der Alarmanlage einer Diebstahlsicherung zu koppeln. Bewegt sich bei abgeschlossenem Fahrzeug eine Person im Bereich der erfaßten Teilräume, veranlaßt die Auswerteeinrichtung die Aktivierung und Auslösung der Alarmeinrichtung.

Es wird auch möglich sein, Bewegungen der auf den Sitzen befindlichen Personen über die Auswerteeinrichtung festzustellen und abhängig davon Airbags und/oder Rückhalteeinrichtungen zu beeinflussen.

Statt eines Sensors 5 mit stationären Sendern 6 kann auch ein schwenkbarer Sender 6, z.B. vertikal und/oder horizontal, verwendet werden, der die Teilräume über mehrere Positionen abtastet.

## Patentansprüche

1. Verfahren zur Erfassung und Überwachung eines Teilraumes zum Feststellen der Platzbesetzung in einem Fahrzeug und zur daraus ableitbaren Aktivierung und/oder Schaltung von Rückhaltesystemen,
bei dem von einer Sensoreinrichtung (5) mit Sender und Empfänger Ultraschall pulsartig in Form eines Bursts mit mehreren Zyklen in Richtung des Teilraumes abgestrahlt wird,
in dem Teilraum (12) ein Schallfeld erzeugt wird,
die Rückssignale des erzeugten Schallfeldes einer Auswerteeinrichtung zugeleitet und hinsichtlich Laufzeitdifferenz, somit hinsichtlich der Entfernung, ausgewertet werden,
wobei abhängig hiervon Rückhaltesysteme aktiviert und/oder geschaltet werden,
**dadurch gekennzeichnet,**
**daß** die Sensoreinrichtung (5) für den Teilraum (12) mehrere Sender (6) und mehrere Empfänger (7) verwendet,
**daß** die Rücksignale des erzeugten Schallfeldes zusätzlich hinsichtlich der von den Amplituden der Rücksignale bestimmten Signalkontur erfaßt und hinsichtlich einer Kontur eines Objekts in dem Teilraum (12) in der Auswerteeinrichtung ausgewertet werden.

2. Verfahren nach Anspruch 1, **dadurch gekennzeichent, daß** durch die Sensoreinrichtung (5) ein dynamisches Schallfeld erzeugt wird.

3. Verfahren nach Anspruch 2, **dadurch gekennzeichnet, daß** das dynamische Schallfeld durch vertikal und/oder horizontal schwenkbare Sender (6) erzeugt wird.

4. Verfahren nach Anspruch 2, **dadurch gekennzeichnet, daß** das dynamische Schallfeld durch phasensteuerbare Sender (6) der Sensoreinrichtung (5) erzeugt wird.

5. Verfahren nach einem der vorhergehenden Ansprüche, **dadurch gekennzeichnet, daß** ein oder mehrere Sender (6) der Sensoreinrichtung (5) Ultraschall in unterschiedliche Richtungen (I, II, III) gerichtet abstrahlen.

6. Verfahren nach einem der vorhergehenden Ansprüche, **dadurch gekennzeichnet, daß** die Wiederholfrequenz der pulsartig abgestrahlten Bursts an das zu beobachtende Objekt und/oder dessen Position im Teilraum und/oder ein Ereignis angepaßt wird.

7. Verfahren nach einem der vorhergehenden Ansprüche, **dadurch gekennzeichnet, daß** der abgestrahlte Ultraschall in Form einer Rechteckschwingung erfolgt.

8. Verfahren nach einem der Ansprüche 1 bis 6, **dadurch gekennzeichnet, daß** der abgestrahlte Ultraschall in Form einer Sinusschwingung erfolgt.

9. Einrichtung zur Erfassung und Überwachung eines Teilraumes zum Feststellen der Platzbesetzung in einem Fahrzeug für die Aktivierung und/oder Schaltung von Rückhaltesystemennach den Verfahrensansprüchen 1 bis 8,
mit einer Sensoreinrichtung (5) mit Sender (6) und Empfänger (7) für Ultraschall, wobei der Ultraschall pulsartig in Form eines Bursts mit mehreren Zyklen abgestrahlt wird,
mit einer Rücksignalauswerteeinrichtung, wobei an die Rücksignalauswerteeinrichtung zu aktivierende und/oder zu schaltende Rückhaltesysteme angeschlossen sind, wobei die Sensorsignale hinsichtlich ihrer Laufzeit zur Entfernungsmessung ausgewertet werden,
**dadurch gekennzeichnet,**
**daß** für den zu erfassenden Teilraum (12) eine Sensoreinrichtung (5) mit mehreren Sendern (6) und Empfängern (7) vorgesehen ist,
die Auswerteeinrichtung die mehreren Sensorsignale hinsichtlich der von den Amplituden bestimmten Signalkontur erfaßt und hinsichtlich einer Kontur eines Objekts in dem Teilraum (12) auswertet.

10. Einrichtung nach Anspruch 9, **dadurch gekennzeichnet, daß** die Sensoreinrichtung (5) mit einem oder mehreren schwenkbaren Sendern (6) und einem oder mehreren Empfängern (7) ausgestattet ist.

11. Einrichtung nach Anspruch 9, **dadurch gekennzeichnet, daß** die Sensoreinrichtung (5) mit einem oder mehreren phasensteuerbaren Sendern (6) und einem oder mehreren Empfängern (7) ausgestattet ist.

12. Einrichtung nach einem der Ansprüche 9 bis 11, **dadurch gekennzeichnet, daß** die Sensoreinrichtung (5) im Bereich des Licht-Domes (10), im Bereich der A-Säulen (11) im Fahrzeuginnenraum oder mittig am Fahrzeughimmel des Fahrzeuges (1) angeordnet ist.

13. Einrichtung nach einem der Ansprüche 9 bis 12, **dadurch gekennzeichnet, daß** mehrere Sender (6) der Sensoreinrichtung (5) für jeden Vordersitz (2) vorhanden sind, die auf unterschiedliche Sitzbereiche gerichtet sind.

14. Einrichtung nach einem der Ansprüche 9 bis 12, **dadurch gekennzeichnet, daß** mehrere Sender (6) einer zusätzlichen Sensoreinrichtung (5) für jeden Rücksitz vorhanden sind, die auf unterschiedliche Sitzbereiche gerichtet sind.

15. Einrichtung nach einem der Ansprüche 9 bis 14, **dadurch gekennzeichnet, daß** mehrere Sender (6) und mehrere Empfänger (7) der Sensoreinrichtung (5) zu Gruppen übereinander bzw. nebeneinander zusammengefaßt sind.

16. Einrichtung nach einem der Ansprüche 9 bis 15, **dadurch gekennzeichnet, daß** die Sensoreinrichtung (5) vertikal und/oder horizontal gruppierte Sender (6) und Empfänger (7) aufweist.

17. Einrichtung nach einem der Ansprüche 9 bis 16, **dadurch gekennzeichnet, daß** ein oder mehrere Sender (6) und Empfänger (7) der Sensoreinrichtung (5) für zusätzliche Teilräume, z.B. Fensterräume, vorhanden sind.

18. Einrichtung nach einem der Ansprüche 9 bis 17, **dadurch gekennzeichnet, daß** die Auswerteeinrichtung mit Gebern für Sitzposition oder Zueinanderanordnung von Sitzteilen verbunden ist.

19. Einrichtung nach einem der Ansprüche 9 bis 18, **dadurch gekennzeichnet, daß** die Auswerteeinrichtung zusätzlich mit einer Diebstahlsicherungseinrichtung verbunden ist.

## Claims

1. Method for detecting and monitoring a partial space for the purpose of establishing the seat occupancy in a vehicle, and for activating and/or controlling restraint systems in a way derivable therefrom, in the case of which a sensor device (5) with a transmitter and receiver emits ultrasound in a pulsed fashion in the form of a burst having several cycles in the direction of the partial space, a sound field is generated in the partial space (12), and the return signals of the generated sound field are fed to an evaluation device and evaluated with regard to travel time difference, and with regard to the distance, restraint systems being activated and/or controlled as a function thereof, **characterized in that** the sensor device (5) uses several transmitters (6) and several receivers (7) for the partial space (12), **in that** the return signals of the generated sound field are additionally detected with regard to the signal contour determined by the amplitudes of the return signals, and are evaluated in the evaluation device with regard to a contour of an object in the partial space (12).

2. Method according to Claim 1, **characterized in that** the sensor device (5) generates a dynamic sound field.

3. Method according to Claim 2, **characterized in that** the dynamic sound field is generated by transmitters (6) which can be pivoted vertically and/or horizontally.

4. Method according to Claim 2, **characterized in that** the dynamic sound field is generated by phase-controllable transmitters (6) of the sensor device (5).

5. Method according to one of the preceding claims, **characterized in that** one or more transmitters (6) of the sensor device (5) emit ultrasound directed in different directions (I, II, III).

6. Method according to one of the preceding claims, **characterized in that** the repetition frequency of the bursts emitted in a pulsed fashion is adapted to the object to be observed and/or position thereof in the partial space, and/or an event.

7. Method according to one of the preceding claims, **characterized in that** the ultrasound is emitted in the form of a square wave.

8. Method according to one of Claims 1 to 6, **characterized in that** the ultrasound is emitted in the form of a sinusoidal oscillation.

9. Device for detecting and monitoring a partial space for the purpose of establishing the seat occupancy in a vehicle in order to activate and/or control restraint systems, according to the Method Claims 1 to 8, having a sensor device (5) with a transmitter (6) and receiver (7) for ultrasound, the ultrasound being emitted in a pulsed fashion in the form of a burst with several cycles, and having a return signal evaluation device, restraint systems to be activated and/or to be controlled being connected to the return signal evaluation device, the sensor signals being evaluated with regard to their travel time for the purpose of distance measurement, **characterized in that** a sensor device (5) with several transmitters (6) and receivers (7) is provided for the partial space (12) to be detected, and the evaluation device detects the several sensor signals with regard to the signal contour determined by the amplitudes, and evaluates them with regard to a contour of an object in the partial space (12).

10. Device according to Claim 9, **characterized in that** the sensor device (5) is fitted with one or more pivotable transmitters (6) and one or more receivers (7).

11. Device according to Claim 9, **characterized in that** the sensor device (5) is fitted with one or more phase-controllable transmitters (6) and one or more receivers (7).

12. Device according to one of Claims 9 to 11, **characterized in that** the sensor device (5) is arranged in the region of the light dome (10), in the region of the A-pillars (11) in the vehicle interior, or centrally on the headliner of the vehicle (1).

13. Device according to one of Claims 9 to 12, **characterized in that** several transmitters (6) of the sensor device (5) are present for each front seat (2) and are directed to different seating areas.

14. Device according to one of Claims 9 to 12, **characterized in that** several transmitters (6) of an additional sensor device (5) are present for each rear seat, and are directed to different seating areas.

15. Device according to one of Claims 9 to 14, **characterized in that** several transmitters (6) and several receivers (7) of the sensor device (5) are combined into groups one above another or next to one another.

16. Device according to one of Claims 9 to 15, **characterized in that** the sensor device (5) has vertically and/or horizontally grouped transmitters (6) and receivers (7).

17. Device according to one of Claims 9 to 16, **characterized in that** one or more transmitters (6) and receivers (7) of the sensor device (5) are present for additional partial spaces, for example window spaces.

18. Device according to one of Claims 9 to 17, **characterized in that** the evaluation device is connected to sensors for seat position or the arrangement of seat parts relative to one another.

19. Device according to one of Claims 9 to 18, **characterized in that** the evaluation device is additionally connected to an anti-theft device.

## Revendications

1. Procédé pour la détection et la surveillance d'un espace partiel pour la détermination de l'occupation de place dans un véhicule et pour l'activation et/ou la commutation pouvant en être dérivées des systèmes de retenue,
dans lequel, à partir d'un dispositif de capteur (5) avec émetteur et récepteur, on émet des ultrasons par impulsions sous forme d'une rafale en plusieurs cycles en direction de l'espace partiel,
dans l'espace partiel (12), on produit un champ sonore,
les signaux en retour du champ sonore produit sont amenés à un dispositif d'évaluation et ils sont évalués en ce qui concerne la différence du temps de fonctionnement ainsi qu'en ce qui concerne la distance,
moyennant quoi, en fonction de ceci, les systèmes de retenue sont activés et/ou commutés,
**caractérisé en ce que**
le dispositif de capteur (5) utilise pour l'espace partiel (12) plusieurs émetteurs (6) et plusieurs récepteurs (7),
**en ce que** les signaux en retour du champ sonore produit sont, de plus, saisis en ce qui concerne le contour de signaux déterminé par les amplitudes des signaux en retour et sont évalués à l'égard d'un contour d'un objet dans l'espace partiel (12) dans le système d'évaluation.

2. Procédé selon la revendication 1, **caractérisé en ce qu'**un champ sonore dynamique est produit par le dispositif de capteur (5).

3. Procédé selon la revendication 2, **caractérisé en ce que** le champ sonore dynamique est produit par des émetteurs (6) pouvant basculer verticalement et/ou horizontalement.

4. Procédé selon la revendication 2, **caractérisé en ce que** le champ sonore dynamique est produit par des émetteurs (6) du dispositif de capteur (5), qui peuvent être commandés en phase.

5. Procédé selon l'une des revendications précédentes, **caractérisé en ce qu'**un ou plusieurs émetteurs (6) du dispositif de capteur (5) émettent des ultrasons dans des directions différentes (I, II, III).

6. Procédé selon l'une des revendications précédentes, **caractérisé en ce que** la fréquence de répétition des rafales de signaux émises par impulsions est adaptée à l'objet à observer et/ou à sa position dans l'espace partiel et/ou à un événement.

7. Procédé selon l'une des revendications précédentes, **caractérisé en ce que** les ultrasons émis se présentent sous forme d'une onde rectangulaire.

8. Procédé selon l'une des revendications 1 à 6, **caractérisé en ce que** les ultrasons émis se présentent sous forme d'une onde sinusoïdale.

9. Dispositif pour la détection et la surveillance d'un espace partiel pour la détermination d'une occupation de place dans un véhicule, pour l'activation et/ou la commutation de systèmes de retenue selon les revendications de procédé 1 à 8,
avec un dispositif de capteur (5) avec des émetteurs (6) et des récepteurs (7) pour les ultrasons, moyennant quoi les ultrasons sont émis par impulsions sous forme d'une rafale en plusieurs cycles,
avec un dispositif d'évaluation de signaux en retour, moyennant quoi des systèmes de retenue à activer et/ou à commuter sont raccordés au dispositif d'évaluation de signaux en retour, les signaux de capteur étant évalués à l'égard de leur durée de fonctionnement pour la mesure de distance,
**caractérisé en ce que**
pour l'espace partiel à saisir (12), il est prévu un dispositif de capteur (5) avec plusieurs émetteurs (6) et récepteurs (7),
le dispositif d'évaluation saisit les différents signaux de capteur à l'égard du contour de signal déterminé par les amplitudes et à l'égard d'un contour d'un objet dans l'espace partiel (12).

10. Dispositif selon la revendication 9, **caractérisé en ce que** le dispositif capteur (5) est muni d'un ou de plusieurs émetteurs basculants (6) et d'un ou plusieurs récepteurs (7).

11. Dispositif selon la revendication 9, **caractérisé en ce que** le dispositif capteur (5) est muni d'un ou de plusieurs émetteurs pouvant être commandés en phase en phase (6) et d'un ou plusieurs récepteurs (7).

12. Dispositif selon l'une des revendications 9 à 11, **caractérisé en ce que** le dispositif de capteur (5) est disposé au niveau du dôme de lumière (10), au niveau des colonnes A (11) dans l'espace intérieur du véhicule ou au milieu du garnissage de toit du véhicule (1).

13. Dispositif selon l'une des revendications 9 à 12, **caractérisé en ce que** plusieurs émetteurs (6) du dispositif de capteur (5) sont prévus pour chaque siège avant (2), et qui sont dirigés sur différentes zones du siège.

14. Dispositif selon l'une des revendications 9 à 12, **caractérisé en ce que** plusieurs émetteurs (6) d'un dispositif de capteur supplémentaire (5) sont prévus pour chaque siège arrière, et qui sont dirigés sur différentes zones du siège.

15. Dispositif selon l'une des revendications 9 à 14, **caractérisé en ce que** plusieurs émetteurs (6) et plusieurs récepteurs (7) du dispositif de capteur (5) sont regroupés de façon superposée ou côte à côte.

16. Dispositif selon l'une des revendications 9 à 15, **caractérisé en ce que** le dispositif de capteur (5) présente des émetteurs (6) et des récepteurs (7) groupés verticalement et/ou horizontalement.

17. Dispositif selon l'une des revendications 9 à 16, **caractérisé en ce qu'**un ou plusieurs émetteurs (6) et récepteurs (7) du dispositif de capteur (5) sont prévus pour des espaces partiels supplémentaires, par exemple les espaces de fenêtres.

18. Dispositif selon l'une des revendications 9 à 17, **caractérisé en ce que** le dispositif d'évaluation est raccordé à des indicateurs pour la position de siège ou l'agencement des zones de siège entre elles.

19. Dispositif selon l'une des revendications 9 à 18, **caractérisé en ce que** le dispositif d'évaluation est, de plus, raccordé à un dispositif antivol.
